# EUROPEAN PATENT APPLICATION

(11) **EP 4 450 851 A1**
(43) Date of publication of application: **23.10.2024**
(21) Application number: 22906702.0
(22) Date of filing: 16.12.2022
(51) Int. Cl.: F16K 1/00

(54) **STOP VALVE**

(30) Priority: 18.12.2021 CN 202123214781 U; 18.12.2021 CN 202123218667 U; 18.12.2021 CN 202123220452 U
(71) Applicant: Zhejiang Dunan Artificial Environment Co., Ltd., Shaoxing Zhejiang 311835 (CN)
(72) Inventor: FENG, Guanghua, Shaoxing, Zhejiang 311835 (CN); CHEN, Diyong, Shaoxing, Zhejiang 311835 (CN); ZHOU, Feng, Shaoxing, Zhejiang 311835 (CN); SHOU, Jie, Shaoxing, Zhejiang 311835 (CN); TAN, Zhenyu, Shaoxing, Zhejiang 311835 (CN)
(74) Representative: Meyer-Dulheuer MD Legal Patentanwälte PartG mbB
(86) International application number: PCT/CN2022/139684
(87) International publication number: WO 2023/109957

(57) **Abstract**

A stop valve (100) is provided. The stop valve (100) includes: a valve seat (10) made of a stainless steel material and a valve core (20). The valve seat (10) is at least provided with a first opening (11) and a second opening (12). At least part of the valve core (20) is provided inside the valve seat (10) and can move along an axial of the valve seat (10), such that the first opening (11) and the second opening (12) are in communication with each other or a communication between the first opening (11) and the second opening (12) is cut off. The valve seat (10) includes a base (15) and a sleeve (14), at least part of the valve core (20) is located in the sleeve (14) and extends into the base (15), and the base (15) and the sleeve (14) are separately arranged and fixedly connected to each other.

## Description

### CROSS-REFERENCE TO RELATED APPLICATIONS

The present application claims priority to Chinese patent application Nos. 202123214781.9, filed on December 18, 2021, and titled "STOP VALVE", 202123218667.3, filed on December 18, 2021, and titled "STOP VALVE", and 202123220452.5, filed on December 18, 2021, and titled "STOP VALVE". The contents of the above identified applications are hereby incorporated herein in their entireties by reference.

### TECHNICAL FIELD

The present application relates to a field of refrigeration technology, and in particular, to a stop valve.

### BACKGROUND

In a refrigeration system, a stop valve plays an important role in cutting off and throttling a medium in a pipeline where the stop valve is located in. An opening and closing components of the stop valve is a valve core, and the valve core is mainly used for cutting off the medium in low-temperature environments.

In the stop valve of the related art, the valve seat includes a base and a sleeve, the base is integrally processed and made of cropper, and there is a problem of stress concentration on a transition portion between the sleeve and the base and being prone to crack.

### SUMMARY

According to various embodiments of the present application, a stop valve is provided as follows.

In the present application, the stop valve is provided. The stop valve includes a valve seat and a valve core made of stainless steel. The valve seat is at least provided with a first opening and a second opening. At least part of the valve core is disposed in the valve seat and capable of moving along an axis of the valve seat to communicate the first opening with the second opening or cut off a communication between the first opening and the second opening. The valve seat includes a base and a sleeve, at least part of the valve core is located in the sleeve and extends into the base, and the base and the sleeve are separately arranged and fixedly connected.

The details of one or more embodiments of the present application are presented in the accompanying drawings and description hereinafter. The other features, objectives, and advantages of the present application will become apparent from the specification, drawings, and claims.

### BRIEF DESCRIPTION OF THE DRAWINGS

For a better description and illustration of embodiments and/or examples of those disclosures disclosed herein, reference may be made to one or more attached drawings. Additional details or examples used to describe the drawings should not be considered as limiting the scope of any of the disclosed disclosures, currently described embodiments and/or examples, and currently understood best modes of these disclosures.
FIG. 1 is a schematic diagram of a stop valve of one or more embodiments.
FIG. 2 is a cross-sectional schematic view of a stop valve of one or more embodiments.
FIG. 3 is a cross-sectional schematic diagram of a stop valve in a front view of one or more embodiments.
FIG. 4 is an exploded view of a stop valve of one or more embodiments.
FIG. 5 is an exploded cross-sectional schematic view of a stop valve of one or more embodiments.
FIG. 6 is a cross-sectional schematic view of a stop valve in an opened state in one or more embodiments.
FIG. 7 is a partial enlargement view of portion A in FIG. 6.
FIG. 8 is a cross-sectional schematic view of a stop valve in a closed state in one or more embodiments.
FIG. 9 is a schematic diagram of a stop valve of one or more embodiments.
FIG. 10 is an exploded cross-sectional schematic view of a stop valve of one or more embodiments.
FIG. 11 is an exploded view of a stop valve of one or more embodiments.
FIG. 12 is an exploded cross-sectional schematic view of a stop valve of one or more embodiments.
FIG. 13 is an exploded view of a stop valve of one or more embodiments.
FIG. 14 is a cross-sectional schematic view of a stop valve of one or more embodiments.
FIG. 15 is a cross-sectional schematic diagram of a stop valve in a front view in one or more embodiments.
FIG. 16 is a schematic diagram of a stop valve of one or more embodiments.
FIG. 17 is a schematic diagram of a process of normally installing a valve core of one or more embodiments.
FIG. 18 is a schematic diagram of a process of reservedly installing a valve core of one or more embodiments.

### Reference signs are as follows.

100 represents a stop valve; 10 represents a valve seat; 11 represents a first opening; 111 represents a first communication pipe; 112 represents a first connection pipe; 12 represents a second opening; 121 represents a second communication pipe; 122 represents a second connection pipe; 13 represents a collar; 131 represents a valve port; 132 represents a second limiting portion; 133 represents a second protrusion; 14 represents a sleeve; 15 represents a base; 151 represents a first segment; 1511 represents a first installing opening; 1512 represents a first limiting portion; 152 represents a main body segment; 153 represents a second segment; 1531 represents a second positioning portion; 154 represents a second installing opening; 16 represents a connection ring; 17 represents a step; 20 represents a valve core; 21 represents an operation segment; 211 represents a groove; 22 represents a connection segment; 221 represents a first sealing component; 222 represents a first protrusion; 223 represents a first sealing groove; 224 represents a third sealing component; 23 represents an abutting segment; 231 represents a second sealing component; 232 represents a second sealing groove; 30 represents a support; 31 represents a first positioning portion; 40 represent an end cover; 401 represents a third protrusion; 50 represents a protective sleeve; 60 represents a valve assembly; 61 represents a connector; 62 represents a valve spool; 63 represents a housing cover; 64 represents a fourth sealing component; 65 represents an elastic component; and 70 represents a valve body.

### DETAILED DESCRIPTION

The following will provide a clear and complete description of the technical solution in the embodiments of the present application, in communication with the accompanying drawings. Obviously, the described embodiments are only a part of the embodiments of the present application, not all of them. Based on the embodiments in the present application, all other embodiments obtained by ordinary skill in this art without creative labor fall within the scope of protection of the present application.

It should be noted that, when a component is considered "set on" another component, it can be directly set on another component or there may be a centered component present simultaneously. When a component is considered "disposed on" another component, it can be directly fixed to another component or there may be a centered component present simultaneously. When a component is considered "fixed to" another component, it can be directly fixed to another component or there may be a centered component present simultaneously.

Unless otherwise defined, all technical and scientific terms used in this article have the same meanings as those commonly understood by those skilled in the technical field of the present application. The terms used in the specification of the present application are only for the purpose of describing specific embodiments and are not intended to limit the present application. The term "or/and" used in this article includes any and all combinations of one or more related listed items.

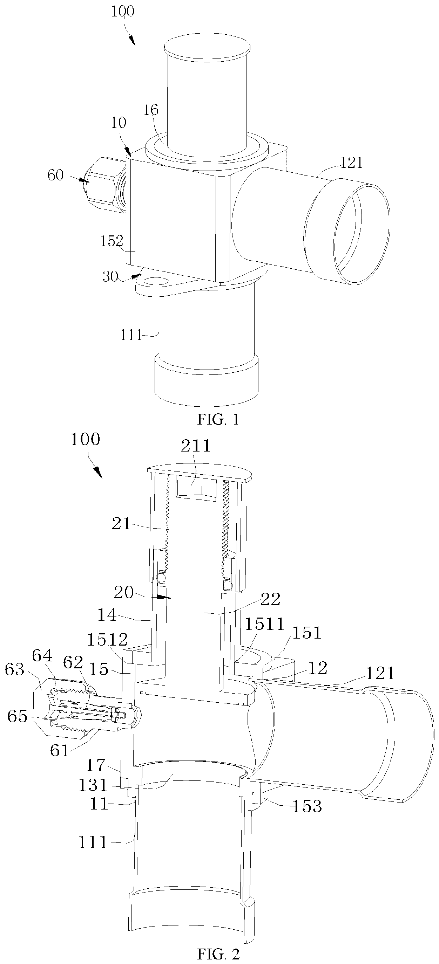

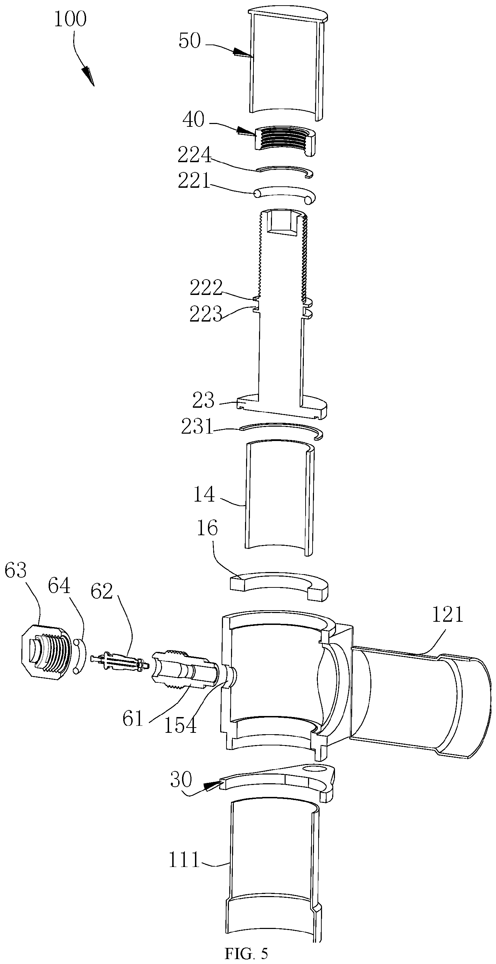

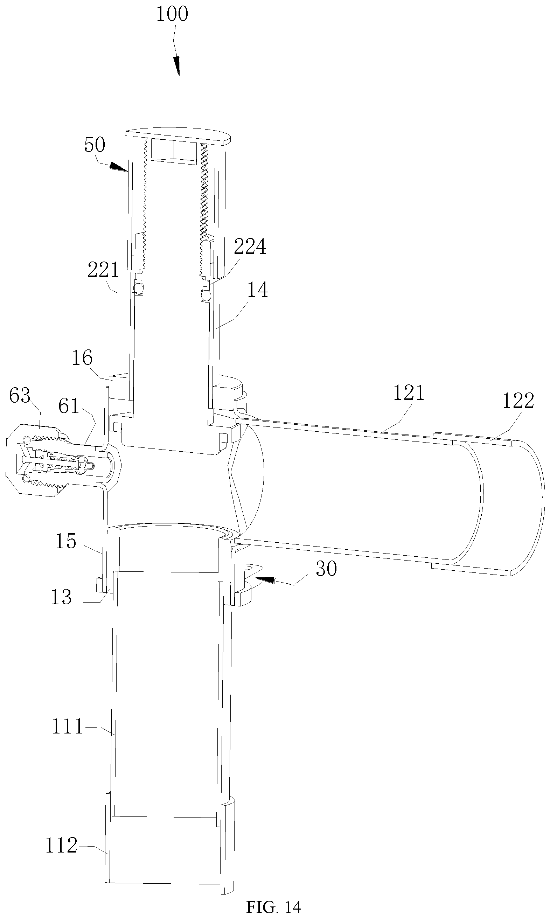

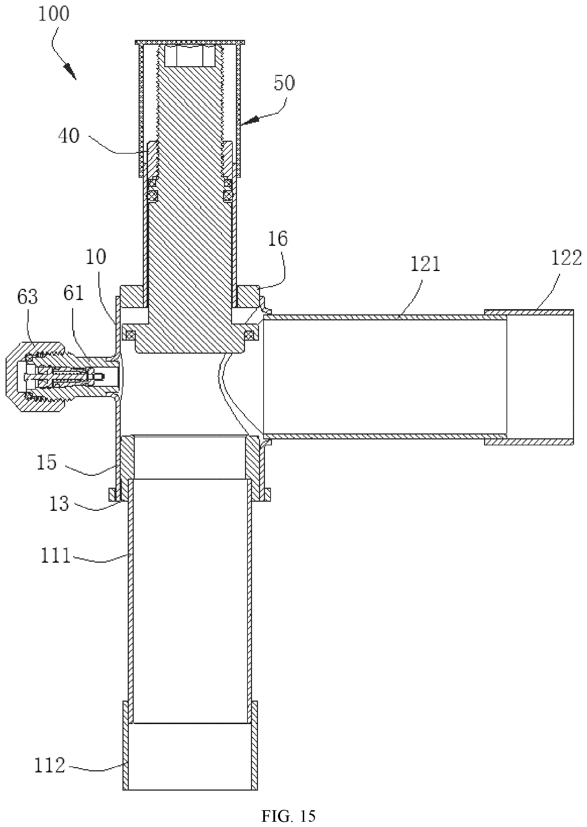

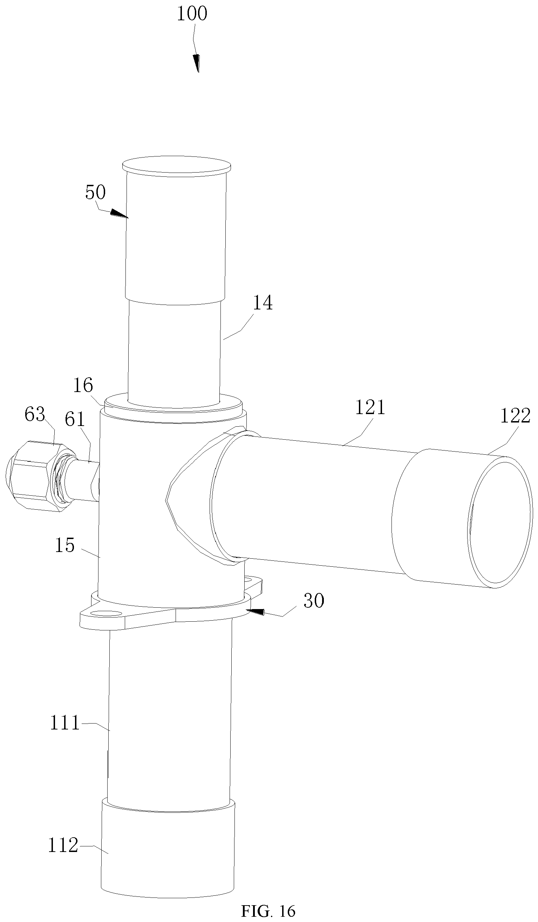

Referring to FIGs. 1 to 18, the present application provides a stop valve 100. The stop valve 100 is installed in a refrigeration system and capable of communicating pipelines and cutting off a communication of the pipelines.

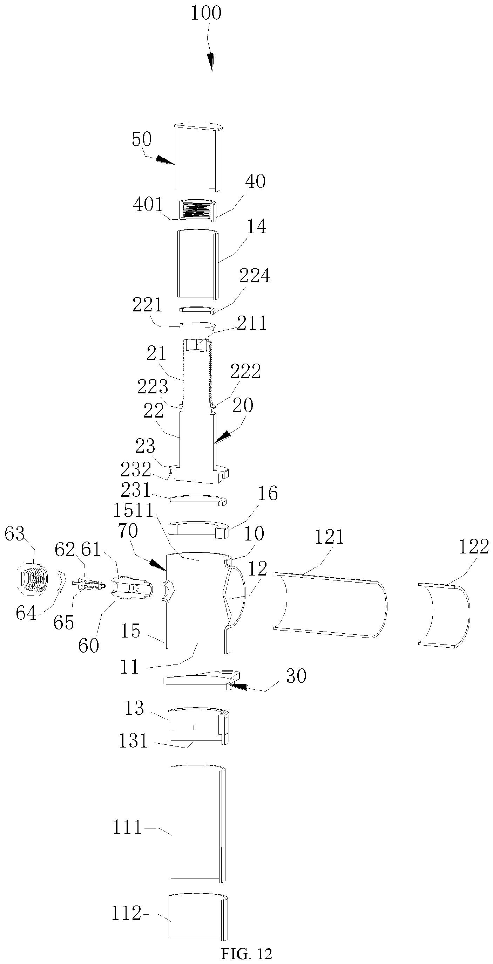

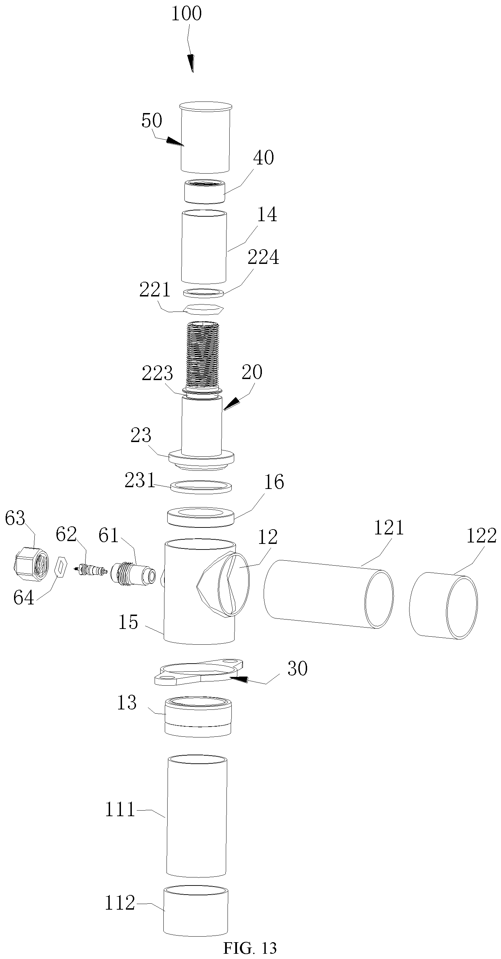

Referring to FIGs. 12 and 13, the stop valve 100 includes a valve body 70 and a valve core 20. At least part of the valve core 20 is disposed in and capable of moving in the valve body 70. The valve body 70 includes a valve seat 10. The valve body 70 and the valve core 20 are both made of stainless steel, which can reduce a cost.

In particular, referring to FIGs. 2, 3, 6, 9 and 12, the valve body 70 includes the valve seat 10. The valve seat 10 is in a hollow structure, which is configured to accommodate components such as the valve core 20 and so on. At least part of the valve core 20 is disposed in the valve seat 10 and capable of moving along an axis of the valve seat 10. In the present embodiment, the valve core 20 can be made of stainless steel. In other embodiments, the valve core 20 can be made of copper.

The valve seat 10 is provided with a first opening 11 and a second opening 12. A first communication pipe 111 is provided in the first opening 11. A second communication pipe 121 is provided in the second opening 12. When the first communication pipe 111 is defined as an inlet of a medium, the second communication pipe 121 is defined as an outlet of the medium. Alternatively, when the first communication pipe 111 is defined as an outlet of the medium, the second communication pipe 121 is defined as an inlet of the medium. When the first communication pipe 111 is defined as the inlet of the medium, the medium enters to the stop valve 100 from the first communication pipe 111, and enters into the valve seat 10 through the first opening 11. If the stop valve 100 is opened, the medium passes through the second opening 12 and flows out of the stop valve 100 through the second communication pipe 121. Alternatively, the medium can enter into the valve seat 10 through the second opening from the second communication pipe 121, and flow out of the stop valve 100 through the first opening 11 and the first communication pipe 111.

An end of the first communication pipe 111 away from the valve body 70 is provided with a first connection pipe 112, the first communication pipe 111 and the first connection pipe 112 are separately arranged and fixedly connected, and the first connection pipe 112 is configured to be connected to an external pipeline. By the first communication pipe 111 and the first connection pipe 112 being separately arranged, the first communication pipe 111 and the first connection pipe 112 are capable of being formed by dimensionally formed pipe fittings, respectively, which can save a material.

The first connection pipe 112 is made of copper. The first communication pipe 111 is made of stainless steel, and the first connection pipe 112 is fixed with the first communication pipe 111 by welding. Since air condition pipelines are made of copper, the first connection pipe 112 made of copper is conducive to being connected to the air condition pipelines by welding.

The first connection pipe 112 is sleeved on an outer wall of an end of the first communication pipe 111, and an inner size of the first connection pipe 112 is greater than that of the first communication pipe 111. By such arrangement, on one hand, a contact area between the first connection pipe 112 and the first communication pipe 111 increases, and a welding strength increases; on the other hand, when the stop valve 100 is connected to the external pipeline, an end of the external pipeline is inserted into the first connection pipe 112, which is capable of enabling an inner size of the first communication pipe 111 to be consistent with that of the external pipeline.

An end of the second communication pipe 121 away from the valve body 70 is provided with a second connection pipe 122. The second communication pipe 121 and the second connection pipe 122 are separately arranged and fixedly connected, and the second connection pipe 122 is configured to be connected to the external pipeline. By arranging the second communication pipe 121 and the second connection pipe 122 separately, the second communication pipe 121 and the second connection pipe 122 are formed by the dimensionally formed pipe fittings, respectively, saving the material and reducing cost.

The second connection pipe 122 is made of copper, the second communication pipe 121 is made of stainless steel, and the second connection pipe 122 is fixed with the second communication pipe 121 by welding. Since the air condition pipelines are made of copper, the second connection pipe 122 made of copper is conducive to being connected to the air condition pipelines by welding.

The second connection pipe 122 is sleeved on an outer wall of an end of the second communication pipe 121, and an inner size of the second connection pipe 122 is greater than that of the second communication pipe 121. By such arrangement, on one hand, a contact area between the second connection pipe 122 and the second communication pipe 121 increases, and the welding strength increases; on the other hand, when the stop valve is connected to the external pipeline, an end of the external pipeline is inserted into the second connection pipe 122, which is capable of enabling an inner size of the first communication pipe 111 to be consistent with that of the external pipe.

By such arrangement, the first communication pipe 111 and the first connection pipe 112 are separately arranged, the first communication pipe 111 and the first connection pipe 112 are capable of being formed by the dimensionally formed pipe fittings, result in saving a material and reducing a cost. Alternatively, the second communication pipe 121 and the second connection pipe 122 are capable of being formed by the dimensionally formed pipe fittings, result in saving a material and reducing a cost.

In the present application, an inner wall of the valve seat 10 is provided with a step 17, the step 17 is provided with a valve port 131, the valve port 131 is in communication with and coaxial with the first opening 11. When the valve core 20 is inserted into the valve port 131, a communication between the first opening and the second opening 12 being cut off can be realized. In the present application, the valve port 131 is disposed on the valve seat 10 to reduce welding processes. In other embodiments, a collar 13 can be separately provided in the valve seat 10, and an end of the collar 13 towards the valve core 20 is formed the valve port 131.

The valve seat 10 is made of stainless steel. The valve seat 10 includes a base 15 and a sleeve 14. At least part of the valve core 20 is located in the sleeve 14 and extends into the base 15. The base 15 and the sleeve 14 are separately arranged and fixedly connected. Alternatively, the first communication pipe 111 and the second communication pipe 121 are fixed on the base 15 by welding, respectively. By such arrangement, an inner size of the base 15 can be adjusted as required, thereby realizing a function of a large diameter flow rate. In addition, since the cost of stainless steel is relatively low, the valve seat 10 made of stainless steel can reduce cost. Furthermore, since the stainless steel is relatively hard, the valve seat 10 is segmented, which is conducive to processing. The base 15 and the sleeve 14 are capable of being used in stop valves 100 of different structures, versatility is excellent and flexibility is high. Thereby, a problem of stress concentration of a transition portion between the base 15 and the sleeve 14 when the valve seat 10 is integrally made by copper can be prevented and it will not be prone to crack.

Referring to FIG. 12, the valve seat 10 is provided with a collar 13, the valve port 131 is formed on the collar 13, and the valve port 131 is in communication with the first opening 11. In some embodiments, the valve port 131 is in communication with and coaxial with the first opening 11. When the valve core 20 abuts against the collar 13, a communication between the first opening 11 and the second opening 12 can be cut off.

A diameter of an opening of the valve seat 10 towards the collar 13 is greater than an outer size of the valve core 20, facilitating installing the valve core 20 from such opening.

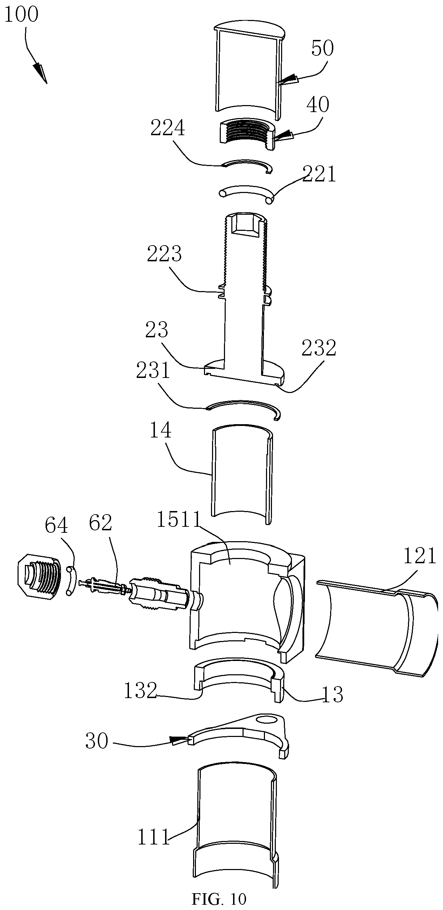

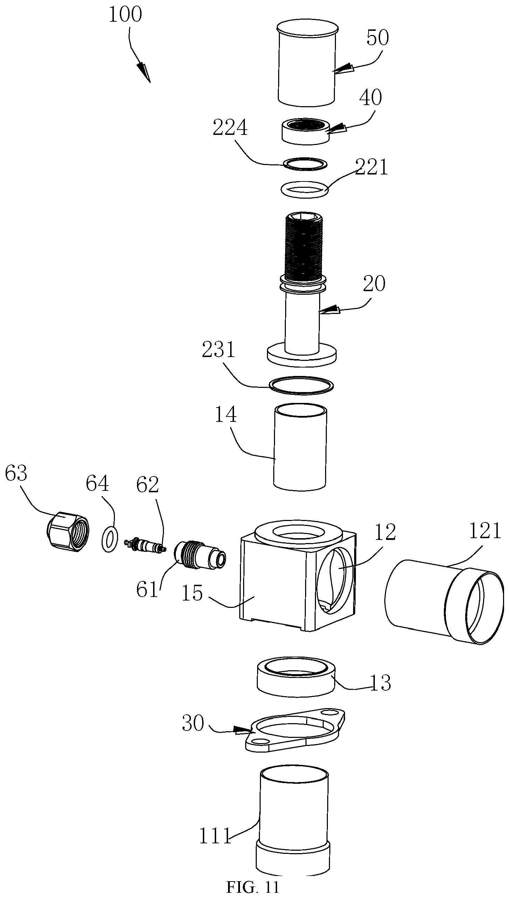

Referring to FIGs. 10 and 11, in the present embodiment, the collar 13 is made of stainless steel, and the collar 13 and the valve seat 10 are separately arranged and fixedly connected. Since the stainless steel is relative hard, the collar 13 and the valve seat 10 are separately arranged, which is conducive to processing and reducing cost. In addition, the valve seat 10 and the collar 13 are capable of being used in stop valves of different structures, facilitating versatility and flexibility. Furthermore, the collar 13 and the base 15 are capable of being processed and formed by the pipe fittings, thereby reducing a generation of a waste material.

An inner wall of an end of the collar 13 towards the first communication pipe 111 is provided with a second limiting portion 132. The first communication pipe 111 abuts against the second limiting portion 132 to restrict a length of the first communication pipe 111 inserting into the collar 13.

In the present application, the second limiting portion 132 can be a step surface. In other embodiments, the second limiting portion 132 can be a structure such as a protrusion and so on.

Alternatively, the collar 13 can be fixed on the valve seat 10 by welding, which is capable of improving a firmness of the stop valve 100.

An inner size of the base 15 is greater than that of the sleeve 14, thereby saving a material of the sleeve 14.

Alternatively, the base 15 is fixed with the sleeve 14 by welding, thereby improving a firmness of the stop valve 100.

The base 15 is formed by a cold heading processing. The sleeve 14 is formed by stainless steel pipes. The stainless steel pipes are ready-made for easy processing. Since the sleeve 14 is directly made of stainless steel pipes, a portion processed by cold heading is correspondingly shortened, a difficulty of the cold heading process is reduced, the valve seat 10 has a small deformation, while alleviating a problem of stress concentration, which is not prone to crack. By such arrangement, it can reduce a generation of a waste material.

Referring to FIGs. 1, 4 and 5, the base 15 includes a main body segment 152 and a first segment 151, and the main body segment 152 is connected to and integrated with the first segment 151. The first segment 151 is provided on a surface of an end of the main body segment 152 towards the sleeve 14, the first segment 151 protrudes relative to an end surface of the main body segment 152, the first segment 151 is configured to be connected to the sleeve 14, and a diameter of the circumscribed circle of the first segment 151 is less than that of the main body segment 152, thereby saving a material.

The first segment 151 is in a ring shape and provided with a first installing opening 1511. The main body segment 152 is in a hollow structure. The first installing opening is in communication with the main body segment 152. The sleeve 14 extends into the first installing opening 1511.

The base 15 further includes a second segment 153. The main body segment 152 is connected to and integrated with the second segment 153. The second segment 153 is provided on an end surface of an end of the main body segment 152 away from the first segment 151. The second segment 153 protrudes relative to an end surface of the main body segment 152. A diameter of a circumscribed circle of the second segment 153 is less than that of a circumscribed circle of the main body segment 152. The second segment 153 is configured to fix the base 15 by fitting with other components.

In the present embodiment, the main body segment 152 is in a square shape, the first segment 151 is in a ring shape, and the second segment 153 is in a column shape. In other embodiments, the main body segment 152 can be in a circle shape, the first segment 151 can be in a square ring shape, and the second segment 153 can be in a prismatic shape.

The valve seat 10 further includes a connection ring 16, the connection ring 16 is sleeve on an outer wall of an end of the sleeve 14, the connection ring 16 is disposed in the first installing opening 1511 and fixedly connected to an inner wall of the first installing opening 1511. The connection ring 16 is disposed between the base 15 and the sleeve 14, a side of the connection ring 16 towards the sleeve 14 is fixedly connected to the sleeve 14, a side of the connection ring 16 away from the sleeve 14 is fixedly connected to the base 15, and an outer size of the sleeve 14 is less than that of the base 15. In addition, by such arrangement, an arrangement of the connection ring 16 is capable of reducing both a width of the sleeve 14 and a width of the valve core 20, thereby saving a material. Furthermore, a material of a sealing component in the sleeve 14 is saved, thereby saving a material and reducing a process difficulty, as long as the sleeve 14 plays a guiding role in the valve core 20. The base 15 is relatively big, which is capable of increasing a flow rate of the medium.

In other embodiments, the connection ring 16 can further be sleeved on the first installing opening 1511 and fixedly connected to an outer wall of the first installing opening 1511.

The connection ring 16 and the base 15 are separately arranged. The connection ring 16 and the sleeve 14 are separately arranged. Since the connection ring 16 and the base 15 are both made of stainless steel, the stainless steel is relatively hard, and such arrangement is conducive to being processed. Since sizes of the connection ring 16, the sleeve 14 and the base 15 are different, the connection ring 16, the sleeve 14 and the base 15 are capable of being individually processed by the stainless steel pipes, which is capable of further reducing the generation of the waste material, saving a cost and reducing processes. Thereby, when the valve seat 10 is integrally made by copper, a problem of stress concentration of a transition portion between the base 15 and the sleeve 14 can be prevented and it in not prone to crack. Similarly, the connection ring 16, the sleeve 14 and the base 15 are capable of using in the stop valves 100 of different specifications, thereby strengthening the flexibility of the stop valve 100.

The base 15 is formed by flipping on two sides thereof after cutting the stainless steel pipes, and the sleeve 14 is formed by dimensionally formed pipe fittings, and a process is not required.

The connection ring 16 is fixed with the base 15 and the sleeve 14 by welding, thereby strengthening a firmness of a connection.

Alternatively, the connection ring 16 is fixedly connected to an inner wall of the first installing opening 1511 by welding, thereby strengthening the firmness of the connection. A protruded first segment 151 is capable of increasing a contact area between the connection ring 16 and the base 15, which is conducive for allowing solder to flow, and facilitating a firmness of a weld.

An inner wall of the first installing opening 1511 is provided with a first limiting portion 1512, and the connection ring 16 abuts against the first limiting portion 1512 to locate the connection ring 16.

In the present embodiments, the first limiting portion 1512 is a ring-shaped step surface. In other embodiments, the first limiting portion 1512 can be a protrusion.

An end surface of the connection ring 16 towards an inner part of the main body segment 152 is in flush with an end surface of the sleeve 14 towards an inner part of the main body segment 152, such that a length of the sleeve 14 inserting into the first installing opening 1511 is appropriate, thereby preventing the sleeve 14 from inserting too deep and obstructing the valve core 20.

Furthermore, an end surface of the connection ring 16 away from the main body segment 152 protrudes relative to an end surface the first segment 151 away from the main body segment 152. Alternatively, the end surface of the connection ring 16 away from the main body segment 152 is in flush with the end surface of the first segment 151 away from the main body segment 152, thereby increasing a contact area between the connection ring 16 and the base 15 and improving sealing performance and weld strength.

The stop valve 100 further includes a support 30, the support 30 is in a ring shape, sleeved outside the base, and fixedly connected to the base 15, and the support 30 and the base 15 are separately arranged. The support 30 is capable of using in the stop valves 100 of different specifications, facilitating a flexibly of the stop valve 100.

The support 30 is fixedly connected to the base 15 by welding, which is conducive to being processed. The support 30 is made of stainless steel, since the stainless steel is relatively hard, such arrangement between the support 30 and the base 15 is convenient to be processed, and a cost is reduced.

Alternatively, the support 30 is sleeved outside the second segment 153 and abuts against the main body segment 152. The support 30 plays a support role in the main body segment 152, and the base 15 can be installed and fixed by the support 30.

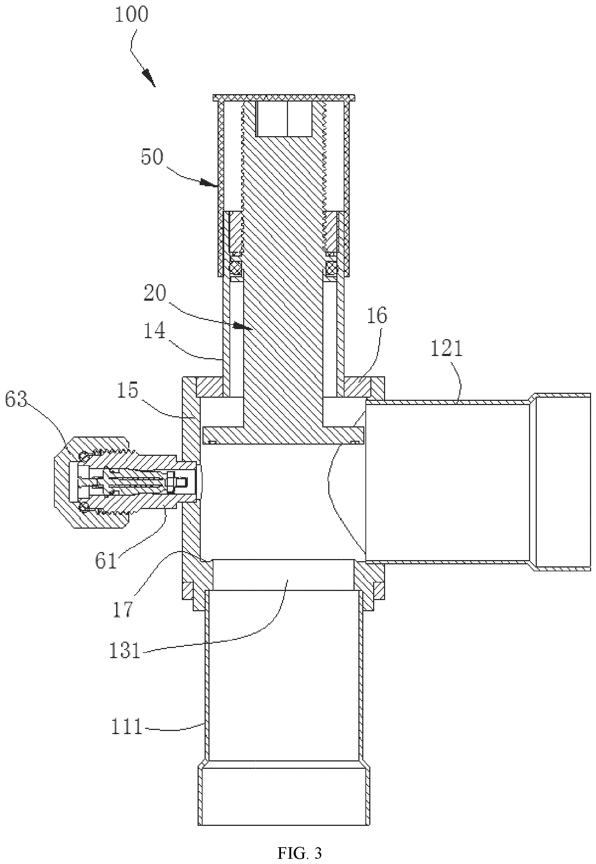

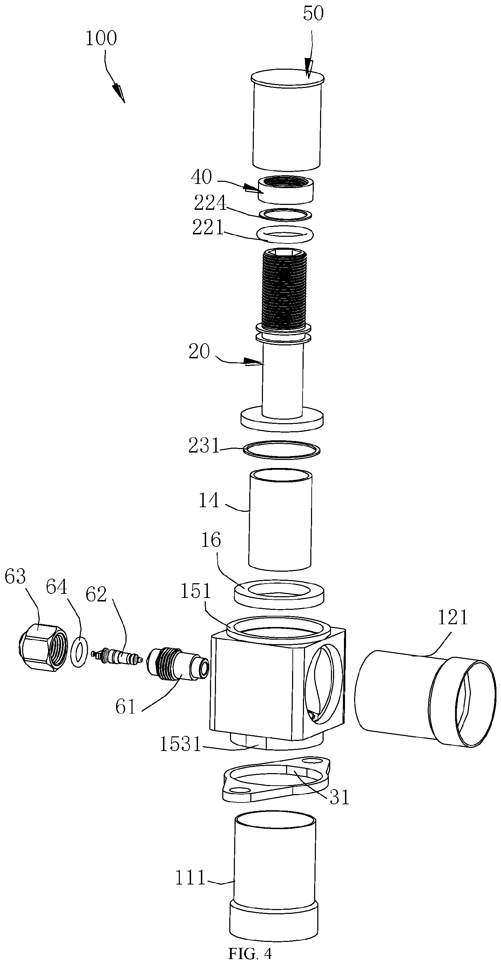

Referring to FIGs. 3 and 4, an inner wall of the support 30 is provided with a first positioning portion 31, an outer wall of the second segment 153 is provided with a second positioning portion 1531, and the support 30 and the second segment 153 are located and installed by the first positioning portion 31 and the second positioning portion 1531. When the support 30 is welded to the second segment 153, the first positioning portion 31 fits with the second positioning portion 1531 to play a role of limiting, which prevents the support 30 from rotating, and an external tool for clamping the support 30 is not required.

In the present embodiment, the first positioning portion 31 and the second positioning portion 1531 are both planes, a plane of the support 30 is in contact with a plane of the second segment 153. In other embodiments, the first positioning portion 31 and the second positioning portion 1531 can be a protrusion and other structures.

In some embodiments, the valve body 70 further includes an end cover 40, and the end cover 40 is disposed at an end of the valve seat 10.

In particular, two ends of the sleeve 14 are individually provided with openings, an opening of the sleeve 14 away from the base 15 is provided with an end cover 40. The end cover 40 is provided with an inner thread, an end of the valve core 20 is provided with an outer thread, by a thread cooperation between the inner thread of the end cover 40 and the outer thread of the valve core 20, it can realize a movement of the valve core 20 along an axis of the valve core 20.

An end of the end cover 40 penetrates through valve seat 10 and the end cover 40 and valve seat 10 are separately arranged, and the end cover 40 is fixedly connected to the valve seat 10. By arranging the valve seat 10 and the end cover 40 separately, during a process, the valve seat 10 and the end cover 40 are formed by pipe fittings, respectively. A design of the valve body 70 with multi-segment can reduce the generation of the waste material, save the cost, and reduce the processes. In addition, since the end cover 40 and the valve seat 10 are both made of stainless steel, the stainless steel is relatively hard, and such arrangement is conducive to being processed. The end cover 40 and the valve seat 10 are capable of being used in the stop valves 100 of different specifications, facilitating flexibility of the stop valves 100, and improving versatility of the stop valves 100.

The valve core 20 includes a connection segment 22 and an operation segment 21 connected to each other. The operation segment 21 penetrates through the end cover 40. An outer thread is located on the operation segment 21. An end surface of an end of the operation segment 21 away from the base 15 is provided with a groove 211. The groove 211 is provided with at least two planes parallel to each other, so as to allow the external tool to operate the valve core 20 to rotate. In some embodiments, at least part of the connection segment 22 is disposed in the sleeve 14.

The groove is provided with six planes interconnected to each other, so as to allow a hex-wrench to operate.

An outer wall of the connection segment 22 is provided with a first sealing component 221, the first sealing component 221 abuts against an inner wall of the sleeve 14, and a material of the first sealing component 221 can be saved by providing the connection ring 16.

Two sides of the first sealing component 221 are provided with first protrusions 222. A first sealing groove 223 is formed by the first protrusions 222 on two sides of the first sealing component 221. The first protrusion 222 towards the end cover 40 is provided with a third sealing component 224. The third sealing component 224 is capable of abutting against the end cover 40. When the stop valve is fully opened, the third sealing component 224 abuts against the end cover to play a role of buffering and limiting.

Referring to FIG. 12, in some embodiments, an outer wall of the connection segment 22 is provided with a third sealing component 224. An outer wall of the operation segment 21 is provided with a first protrusion 222. The third sealing component 224 is disposed on the first protrusion 222. An end of the end cover 40 is provided with a third protrusion 401. The third protrusion 401 is capable of abutting against the third sealing component 224 to play a role of buffering and limiting.

Alternatively, a side surface of the third protrusion 401 towards the third sealing component 224 is an arc surface, thereby improving firmness between the third protrusion 401 and the third sealing component 224.

A first sealing groove 223 is formed between the first protrusion 222 and the connection segment 22. The first sealing component 221 is provided in the first sealing groove 223.

The valve core 20 further includes an abutting segment 23. An outer size of the abutting segment 23 is greater than an outer size of the connection segment 22. When the stop valve 100 is closed, the abutting segment 23 abuts against the step 17 and is capable of sealing the valve port 131. An outer size of the connection segment 22 is relatively less, which can save the material. In some embodiments, the abutting segment 23 is disposed on the base 15 and connected to the connection segment 22. When the stop valve 100 is closed, the abutting segment 23 abuts against the collar 13 to seal the valve port 131.

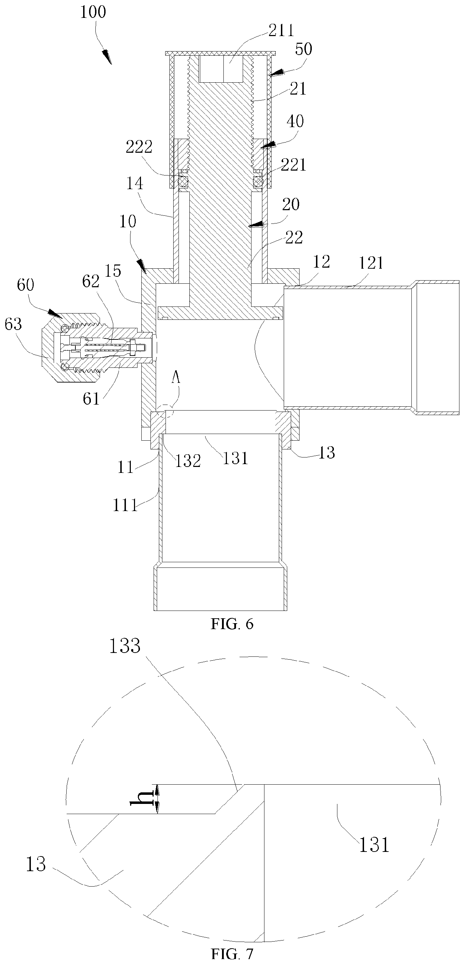

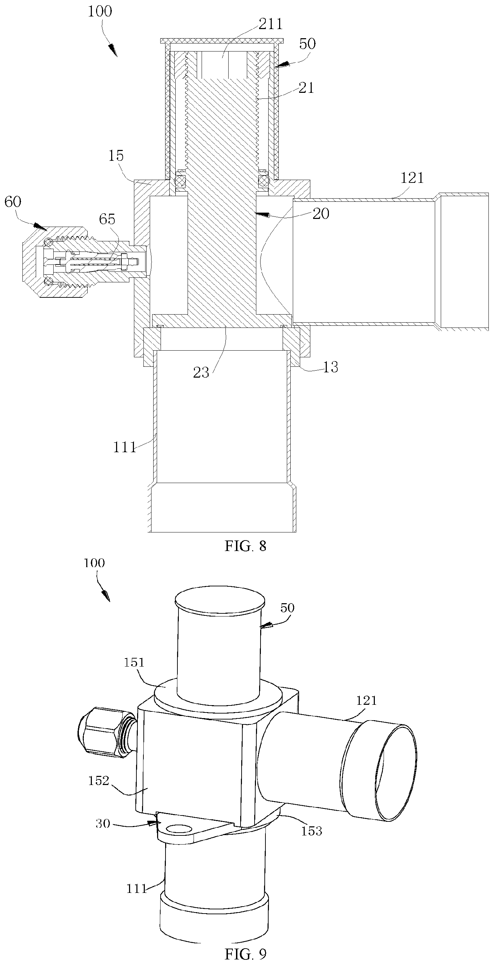

Referring to FIGs. 7 and 8, a side surface of the abutting segment 23 towards the valve port 131 is provided with a second sealing component 231. The second sealing component 231 is capable of abutting against the step 17, facilitating a sealing performance for the valve port 131.

An end surface of the collar 13 towards the valve core 20 is provided with a second protrusion 133. The second sealing component 231 is capable of abutting against the second protrusion 133, thereby improving a sealing performance of the valve port 131.

The second sealing component 231 is a copper gasket or a sealing gasket, since the copper gasket and the sealing gasket are both soft, facilitating a sealing performance of the stop valve 100.

A side surface of the abutting segment 23 towards the valve port 131 is provided with a second sealing groove 232. The second sealing component 231 is disposed in the second sealing groove 232. The second sealing groove 232 is in a ring shape. A groove opening of the second sealing component 232 is in a necking structure, i.e., a width of the groove opening of the second sealing groove 232 is less than a width of a groove bottom of the second sealing groove 232, such that the second sealing component 231 is capable of being tightly snapped in the second sealing groove 232 and not easy to fall out.

Alternatively, a cross section of the second sealing groove 232 is in a trapezium shape, which is conducive to being processed.

Furthermore, the second protrusion 133 is in a ring shape and encircles a periphery of the valve port 131. Alternatively, the second protrusion 133 is multiple, a plurality of the second protrusions 133 are evenly arranged around the periphery of the valve port 131.

Along a direction towards the valve core 20, a thickness of the second protrusion 133 is gradually decreased, such that an end of the second protrusion 133 towards the valve core 20 is relatively sharp, which can be embedded into the second sealing component 231. By such arrangement, the sealing performance of the stop valve 100 is strengthened.

In the present embodiment, a side surface of the second protrusion 133 away from the valve core 131 is inclined relative to an axis of the valve port 131. Along a direction towards the valve core 20, a distance between a side surface of the second protrusion 133 away from the valve port 131 and an axis of the valve port 131 is gradually decreased, and an inner side surface of the second protrusion 133 towards the valve port 131 is in flush with a wall surface of the valve port 131. In other embodiments, a side surface of the second protrusion 133 towards the valve port 131 and a side surface of the second protrusion 133 away from the valve port 131 can both be inclined relative to the axis of the valve port 131. Alternatively, the side surface of the second protrusion 133 towards the valve port 131 is inclined relative to the axis of the valve port 131, and a side surface of the second protrusion 133 away from the valve port 131 is parallel to the axis of the valve port 131.

A height h of the second protrusion 133 is in a range of 0.5 mm to 5 mm, such that the height h of the second protrusion 133 is an appropriate value. If the second protrusion 133 is too high, a material is wasted. And if the second protrusion 133 is too low, a sealing performance may be infected. The height of the second protrusion 133 can be 0.5 mm, 1 mm, 2 mm, 3 mm, 4 mm or 5 mm.

The stop valve 100 further includes a protective sleeve 50, the protective sleeve 50 is sleeved outside the sleeve 14, so as to play a protective role for the valve core 20, thereby preventing an outer thread of the operation segment 21 from falling dust and entering to the sleeve 14, and while preventing the dust from accumulating in the groove 211.

In addition, the stop valve 100 further includes a valve assembly 60, a side of the base 15 is provided with a second installing opening 154, and an end of the valve assembly 60 is inserted into the second installing opening 154 and is fixedly connected to an inner wall of the second installing opening 154.

In the present embodiment, the valve assembly 60 is connected to the main body segment 152. The valve assembly 60 is opposite to the second opening 12, which is defined as an inflation inlet or deflation outlet and configured to supply or release the medium for the overall refrigerant system. In other embodiments, an axis of the valve assembly 60 can be perpendicular to an axis of the second opening 12, and the valve assembly 60 can be disposed at other portions of the base 15.

In other embodiments, the valve assembly 60 is not required.

The valve assembly 60 includes a connector 61, the connector 61 is connected to the valve seat 10 and the second installing opening 154, and the connector 61 is a channel for the medium entering to the valve seat 10.

The connector 61 is made of stainless steel and the connector 61 and the base 15 are separately arranged, which is conducive to being processed. The valve assembly 60 is used in the stop valves 100 of different specifications, facilitating the flexibility of the stop valves.

The valve assembly 60 further includes a valve spool 62, a housing cover 63 and a fourth sealing component 64. The valve spool 62 is provided in the connector 61 and capable of communicating the main body segment 152 with the connector 61 or cutting off a communication between the main body segment 152 and the connector 61. The housing cover 63 is sleeved on an outer periphery of the connector 61 and configured to protect the valve spool 62, thereby preventing external impurities from entering to the stop valve 100. The fourth sealing component 64 is located between the housing cover 61 and the connector 61 and fits with the housing cover to seal the connector 61.

In particular, an end of the valve spool 62 is provided with an elastic component 65. When the valve spool 62 does not suffer from external pressure, the valve spool 62 is closed, and at this time, the connector 61 is sealed to block an interior of the valve seat 10 from external world. When the valve spool 62 suffers from the external pressure, the valve spool 62 compresses the elastic component 65 and moves along a direction towards the base 15, thereby removing a blockage between the base 15 and connector 61, such that the base 15 is in communication with the connector 16, and the medium can flow in or out the valve core 10. The elastic component 65 is configured to reset the valve spool 62.

In some embodiments, during a process, a formed stainless steel pipes is used to process the sleeve 14, the base 15 is formed by cold heading stainless steel pipes or rods, the connection ring 16 is sleeved on outer of the sleeve 14 and abuts against the first limiting portion 1512, and the connection ring is fixed on the base 15 and the sleeve 14 by welding, respectively. During this process, the valve core 20 is installed in the base 15 from the first installing opening 1511.

Meanwhile, the support 30 and the valve assembly 60 separately arranged are welded on the base 15, respectively. By separately arranging and fixing each of components by welding, a process is convenient, problems of the stress concentration and being easy to crack can be solved, components separately arranged can be used in the stop valve 100 of other different structures, versatility and flexibility of the stop valve 100 are excellent.

In some embodiments, during a process, the sleeve 14 is processed by the formed stainless steel pipes, the base 15 is processed by the cold heading process, the collar 13 formed by a machine is disposed in the base 15. The collar 13, the base 15, and the sleeve 14 are fixed on the base 15 by welding. By providing the second protrusion 133 on the collar 13, a second sealing component 231 is provided on the valve core 20. When the stop valve 100 is closed, the second sealing component 231 abuts against the second protrusion 133, thereby improving a sealing performance and preventing the stop valve 100 from causing an inner leakage.

In some embodiments, during a process, the base 15, the sleeve 14 and the connection ring 16 are formed by the pipe fittings and fixed to each other by welding, so material waste is less. The first connection pipe 112 and the second communication pipe 122 are formed by the dimensionally formed pipe fittings, respectively, and fixed to each other by welding, and the second connection pipe 122 and the second communication pipe 121 are formed by the dimensionally formed pipe fittings, thereby reducing the generation of the waste material.

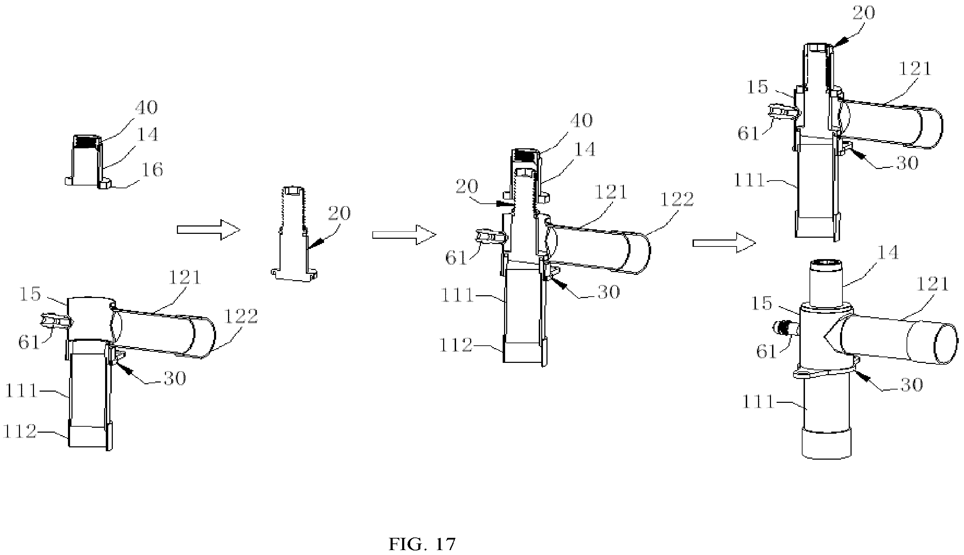

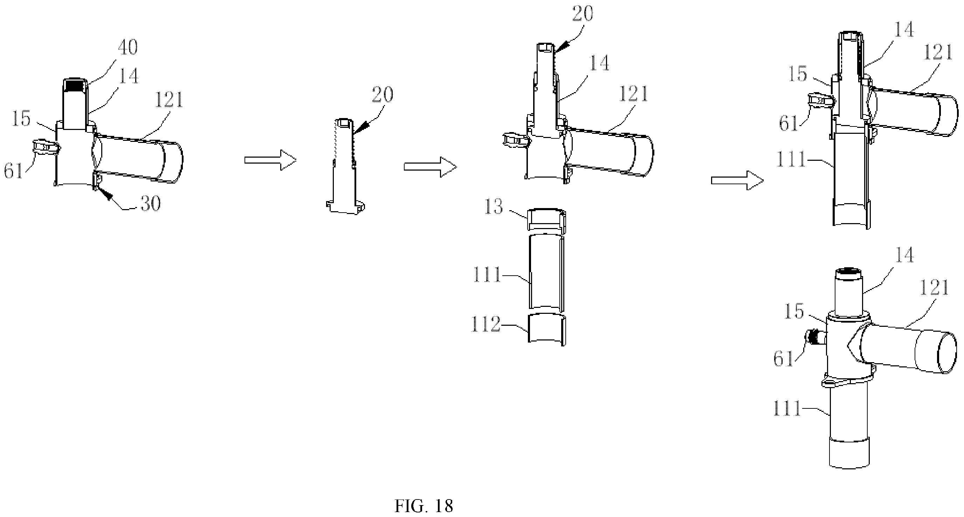

Referring to FIG. 17, during an installation process, in some embodiments, the connector 61, the first communication pipe 111, the second communication pipe 121, the collar 13, the support 30 and the base 15 are first fixedly connected to each other, i.e., lower half part of the stop valve 100 is installed, the valve core 20 is installed into the base 15, and the collar 13 and the sleeve 14 are welded to the base 15, thereby realizing a normal installation of the valve core 20. In other embodiments, referring to FIG. 18, the first communication pipe 111, the sleeve 14, the end cover 40, the connector 61 and the base 15 are connected to each other, the valve core 20 is installed from the first opening 11, and the collar 13 and the second communication pipe 121 are installed, thereby realizing a reserved installation of the valve core 20. Multi-stage valve body 70 is capable of enabling an installation process of the valve core 20 to be flexible.

The various technical features of the above embodiments can be combined in any way. In order to make the description concise, not all possible combinations of the various technical features in the above embodiments have been described. However, as long as there is no contradiction in the combination of these technical features, they should be considered within the scope of this specification.

The above embodiments only express several embodiments of the present application, and their descriptions are more specific and detailed, but should not be understood as limiting the scope of the utility model patent. It should be pointed out that for ordinary technical personnel in this field, several modifications and improvements can be made without departing from the concept of the present application, all of which fall within the scope of protection of the present application. Therefore, the scope of protection of the present patent application should be based on the attached claims.

## Claims

1. A stop valve, **characterized by** comprising:
a valve seat made of stainless steel, wherein the valve seat is at least provided with a first opening and a second opening; and
a valve core,
wherein at least part of the valve core is provided in the valve seat and capable of moving along an axis of the valve seat to communicate the first opening with the second opening or cut off a communication between the first opening and the second opening;
the valve seat comprises a base and a sleeve, at least part of the valve core is located in the sleeve and extends into the base, the base and the sleeve are separately arranged and fixedly connected with each other.

2. The stop valve of claim 1, wherein a collar is provided in the valve seat, the collar is provided with a valve port, the valve core is capable of moving along an axis of the valve seat to seal the port, and the collar and the valve seat are separately arranged.

3. The stop valve of claim 2, wherein a second sealing component is provided at a side of the valve core towards the valve port, a second protrusion is provided at an end surface of the collar towards the valve core, the second sealing component is capable of abutting against the second protrusion; and
a second sealing groove in a ring shape is formed on a side surface of the valve core towards the valve port, the second sealing component is provided in the second sealing groove, a groove opening of the second sealing groove is in a necking structure.

4. The stop valve of claim 3, wherein along a direction towards the valve core, a thickness of the second protrusion is gradually reduced, and a height of the second protrusion is in a range of 0.5 mm to 5 mm.

5. The stop valve of claim 3, wherein the valve core comprises a connection segment and an abutting segment, and the connection segment is connected to the abutting segment,
the abutting segment is disposed towards the collar relative to the connection segment, the second sealing component is disposed on the abutting segment, an outer size of the abutting segment is greater than an outer size of the connection segment; and/or
an inner size of the base is greater than an inner size of the sleeve, the abutting segment is located in the base, at least part of the connection segment penetrates through the sleeve.

6. The stop valve of claim 1, wherein
the valve seat further comprises a connection ring, the connection ring is provided between the base and the sleeve, a side of the connection ring towards the sleeve is fixedly connected to the sleeve, a side of the connection ring away from the sleeve is fixedly connected to the base, and an outer size of the sleeve is less than an outer size of the base.

7. The stop valve of claim 6, wherein the connection ring and the base are separately arranged, the connection ring and the sleeve are separately arranged, the connection ring is sleeved on an outer wall of an end of the sleeve and fixedly connected to the sleeve; and an end of the base towards the sleeve is provided with a first installing opening, and the connection ring is inserted into the first installing opening and is fixed on an inner wall of the first installing opening.

8. The stop valve of claim 1, wherein an inner size of the base is greater than an inner size of the sleeve, the valve seat further comprises a connection ring, the connection ring is sleeved on an outer wall of an end of the sleeve and fixedly connected to the sleeve, an end of the base towards the sleeve is provided with a first installing opening, the connection ring is inserted into the first installing opening and is fixedly connected to an inner wall of the first installing opening; and/or,
the connection ring and the base are separately arranged, the connection ring and the sleeve are separately arranged, an inner wall of the first installing opening is provided with a first limiting portion, and the connection ring abuts against the first limiting portion.

9. The stop valve of claim 8, wherein the base comprises a main body segment and a first segment, the first segment is disposed on the main body segment, the first installing opening is located on the first segment, an end surface of the connection ring away from the main body segment protrudes relative to an end surface of the first segment away from the main body segment, or an end face of the connecting ring away from the main body segment is in flush with an end face of the first segment away from the main body segment.

10. The stop valve of claim 1, wherein the stop valve further comprises a support, the support is sleeved outside and fixedly connected to the base, and the support and the base are separately arranged;
the base comprises a main body segment and a second segment, the second segment is disposed at an end of the main body segment, a diameter of a circumscribed circle of the second segment of the base is less than that of a circumscribed circle of the main body segment, the support is sleeved outside the second segment;
an inner wall of the support is provided with a first positioning portion, an outer wall of the second segment is provided with a second positioning portion, the first positioning portion fits with the second positioning portion to locate both the support and the second segment.

11. The stop valve of claim 6, further comprising an end cover, wherein the end cover is disposed on an end of the valve seat, the valve core penetrates through the end cover and is threadedly connected to the end cover, and the end cover and valve seat are separately arranged and fixedly connected.

12. The stop valve of claim 11, wherein an end of the cover end is provided with a third protrusion, an outer wall of the valve core is provided with a first protrusion, the first protrusion is provided with a third sealing component, and the third sealing component is capable of abutting against the third protrusion.

13. The stop valve of claim 6, wherein a first communication pipe is provided at the first opening, an end of the first communication pipe is provided with a first connection pipe, the first connection pipe is capable of being connected to external pipelines, the first communication pipe and the first connection pipe are separately arranged; and/or
a second communication pipe is provided at the second opening, an end of the second communication pipe is provided with a second connection pipe, the second connection pipe is capable of being connecting to external pipelines, the second communication pipe and the second connection pipe are separately arranged.

14. The stop valve of any one of claims 1, 2 and 6, wherein the base is formed by cold heading processing, and the sleeve is made of stainless steel; and/or
the base is formed by pipe fittings, and/or,
the sleeve is formed by pipe fittings.

15. The stop valve of claims 1 or 6, further comprising a valve assembly made of stainless steel, wherein a side surface of the base is provided with a second installing opening, an end of the valve assembly is inserted into the second installing opening and is fixedly connected to an inner wall of the second installing opening, and the valve assembly and the base are separately arranged and fixedly connected.
